(19) Europäisches Patentamt
European Patent Office
Office européen des brevets

(11) **EP 0 856 961 B1**

(12) **EUROPEAN PATENT SPECIFICATION**

(45) Date of publication and mention
of the grant of the patent:
**09.05.2007 Bulletin 2007/19**

(51) Int Cl.:
*H04B 17/00* (2006.01)     *H04B 3/46* (2006.01)
*G10L 19/00* (2006.01)

(21) Application number: **98200727.0**

(22) Date of filing: **24.06.1993**

(54) **Testing telecommunications apparatus**

Testen von Nachrichtenübertragungsgerät

Tester un appareil de télécommunication

(84) Designated Contracting States:
**BE DE ES FR GB IT NL SE**

(30) Priority: **24.06.1992 GB 9213459**
             **21.06.1993 GB 9312758**

(43) Date of publication of application:
**05.08.1998 Bulletin 1998/32**

(62) Document number(s) of the earlier application(s) in
accordance with Art. 76 EPC:
**93913419.3 / 0 647 375**

(73) Proprietor: **BRITISH TELECOMMUNICATIONS
public limited company
London EC1A 7AJ (GB)**

(72) Inventor: **Hollier, Micheal Peter
Ipswich,
Suffolk IP4 2RJ (GB)**

(74) Representative: **Lidbetter, Timothy Guy Edwin et al
BT Group Legal
Intellectual Property Department
PP C5A
BT Centre
81 Newgate Street
London EC1A 7AJ (GB)**

(56) References cited:
• **BEERENDS J G ET AL: "MEASURING THE QUALITY OF AUDIO DEVICES" AMERICAN ENGINEERING SOCIETY CONVENTION,US,NEW YORK, NY, 19 February 1991 (1991-02-19), pages 1-10, XP000603702**
• **MESTER R ET AL: "SPECTRAL ENTROPY-ACTIVITY CLASSIFICATION IN ADAPTIVE TRANSFORM CODING" IEEE JOURNAL ON SELECTED AREAS IN COMMUNICATIONS,US, IEEE INC. NEW YORK, vol. 10, no. 5, 1 June 1992 (1992-06-01), pages 913-917, XP000274726 ISSN: 0733-8716**

**Description**

This invention relates to a method and apparatus for testing equipment for handling speech signals.

In testing such apparatus (for example, a telephone line, a telephone network, or other telecommunications apparatus such as a coder) a test signal is introduced to the input of the telecommunications apparatus, and some test is applied to the resulting output of the apparatus. It is known to derive "objective" test measurements, such as the signal to noise ratio, which can be calculated by automatic processing apparatus. It is also known to apply "subjective" tests, in which a human listener listens to the output of the telecommunications apparatus, and gives an opinion as to the quality of the output.

Some elements of telecommunications systems are linear. Accordingly, it is possible to apply simple artificial test signals, such as discrete frequency sine waves, swept sine signals or chirp signals, random or pseudo random noise signals, or impulses. The output signal can then be analyzed using, for example, Fast Fourier Transform (FFT) or some other spectral analysis technique. One or more such simple test signals are sufficient to characterise the behaviour of a linear system.

On the other hand, modern telecommunications systems include an increasing number of elements which are non-linear and/or time variant. For example, modern low bit-rate digital speech coders, forming part of mobile telephone systems, have a non-linear response and automatic gain controls (AGCs), voice activity detectors (VADs) and associated voice switches, and burst errors contribute time variations to telecommunications systems of which they form part. Accordingly, it is increasingly less possible to use simple test methods developed for linear systems to derive objective measures of the distortion or acceptability of telecommunications apparatus.

However, subjective testing by using human listeners is expensive, time-consuming, difficult to perform, and inconsistent. However, despite these problems the low correlation between objective measures of system performance or distortion and the subjective response of a human user of the system means that such subjective testing remains the way by which telecommunications apparatus is normally tested.

In the paper "Measuring the Quality of Audio Devices" by John G. Beerends and Jan A. Stemerdink, presented at the 90th AES Convention, 1991 February 19-22, Paris, printed in AES Preprints as Preprint 3070 (L-8) by the Audio Engineering Society, it has been proposed to measure the quality of a speech coder for digital mobile radio by using, as test signals; a database of real recorded speech and analyzing the corresponding output of the coder using a perceptual analysis method designed to correspond in some aspects to the processes which are thought to occur in the human ear. In this proposed system the speech signal is divided into individual time portions, and for each portion the frequency spectrum is determined, transformed to a psycho-acoustical (Bark) scale, and then convolved with a frequency-spreading function to determine whether the distortion signal masks the original signal.

It has been proposed (for example in "Objective Measurement Method for Estimating Speech Quality of Low Bit Rate Speech Coding", Irii, Kurashima, Kitawaki and Itoh, NTT Review, Vol 3. No. 5 September 1991) to use an artificial voice signal (i.e. a signal which is similar in a spectral sense to the human voice, but which does not convey any intelligence) in conjunction with a conventional distortion analysis measure such as the cepstral distance (CD) measure, to measure the performance of telecommunications apparatus.

The invention is defined in the appended claims.

The invention will now be illustrated, by way of example only, with reference to the accompanying drawings in which:

Figure 1 is a block diagram showing the arrangement of an embodiment of the invention in use;
Figure 2 is a block diagram showing in greater detail the components of an embodiment of the invention;
Figure 3 is a block diagram showing in greater detail a test signal generator forming part of the embodiment of Figure 2;
Figure 4 shows schematically the structure of a test signal over time;
Figure 5a is a graph of the level of masked noise (dBs) against a pitch (e.g. approximately logarithmic frequency) axis in critical band rate (Bark) units, for different levels of masking noise; and
Figure 5b is a diagram showing the variation of excitation threshold on a pitch (approximately logarithmic frequency) axis in critical band rate (Bark) units, for masking noise at seven given frequencies;
Figure 6 is a block diagram showing in greater detail an analysis unit forming part of the embodiment of Figure 2;
Figures 7a, 7b and 11 form a flow diagram indicating schematically the operation of the analysis unit in the embodiment of Figure 6;
Figure 8a shows schematically an estimate formed in this embodiment of amplitude of excitation, as a function of time and pitch, which would be produced in the human ear by a predetermined speech-like signal; and
Figure 8b is a corresponding plot showing the excitation which would be produced by two spaced clicks;
Figure 9 is a plot of weighting values against frequency for converting amplitude to perceived loudness in this embodiment;
Figure 10 is an exemplary plot of error loudness values for successive time portions calculated by the analysis means according to Figure 7;
Figure 12a is a diagram of distortion amplitude over pitch and time axes representing a low magnitude non-linear distortion of the speech signal depicted in Figure 8a; and
Figure 12b is a plot of perceived error loudness derived from Figure 12a and corresponding in form to Figure 10;
Figure 13a corresponds to Figure 12a but with higher amplitude non-linear distortion; and
Figure 13b likewise corresponds to Figure 12b;
Figure 14a corresponds to Figure 12a but with the substitution of MNRU distortion; and
Figure 14b is a corresponding plot of error loudness over time;
Figure 15a corresponds to Figure 12a but with the substitution of crossover distortion; and
Figure 15b is a corresponding plot of error loudness over time;
Figure 16a corresponds to Figure 12a but with the substitution of clipping distortion due to a voice activity detector; and
Figure 16b is a corresponding plot of error loudness over time.

### Overview of Apparatus

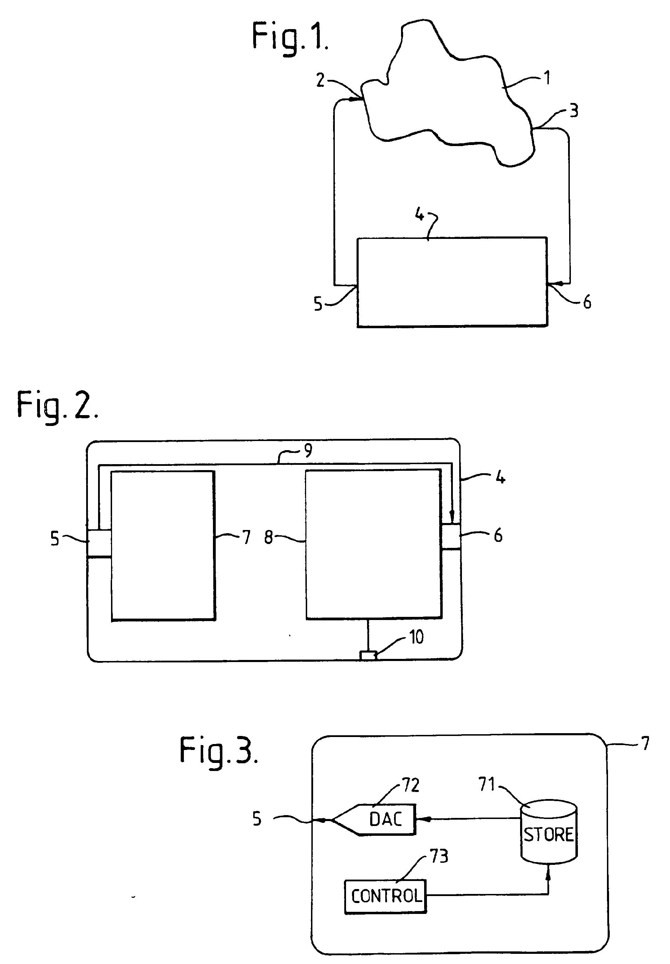

Referring to Figure 1, telecommunications apparatus 1 comprises an input port 2 and an output port 3. Test apparatus 4 comprises an output port 5 for coupling to the input port 2 of the telecommunications apparatus under test, and an input port 6 for coupling to the output port 3 of the telecommunications apparatus under test.

Referring to Figure 2, the test apparatus 4 comprises a test signal generator 7 coupled to the output port 5, for supplying a speech-like test signal thereto, and a signal analyzer unit 8 coupled to the input port 6 for analyzing the signal received from the telecommunications apparatus 1. As will be discussed in greater detail below, the analyzer 8 also utilises an analysis of the test signal generated by the test signal generator 7, and this is indicated in this embodiment by a path 9 running from the output port 5 to the input port 6.

Also provided from the analysis unit 8 is a measurement signal output port 10 at which a signal indicating some measure of the acceptability of the telecommunications apparatus (for example, distortion) is provided either for subsequent processing, or for display on a visual display unit (VDU), not shown.

### First Embodiment

### Speech Signal Generation

It would appear obvious, when testing apparatus such as a coder which is designed to encode human speech, and when employing an analysis method based on the human ear, to use real human speech as was proposed in the above paper by Beerends and Stemerdink. In fact, however, the performance of such test systems is not particularly good, and a test signal designed for the purpose is preferred.

In its simplest form, the artificial speech generator 7 may merely comprise a digital store 71 (e.g. a hard disc or digital audio tape) containing stored digital data from which a speech signal can be reconstituted. The stored data may be individual digitised segments of real speech signals, which are supplied in succession from the store 71 to a signal reconstituting means 72 (e.g. a digital to analogue convertor (DAC)) connected to the output port 5. The data stored in the store 71 comprises one or more speech utterances lasting several seconds in length (for example, on the order of ten seconds).

Alternatively, the store 71 may store speech data in the form of filter coefficients to drive an LPC speech synthesiser, for example, or higher level data (e.g. phoneme, pitch and intensity data) to drive a phoneme synthesiser comprising the reconstituting means.

A control circuit 73 (e.g. a microprocessor) controls the operation of the store unit 71 to select a particular test signal to be output.

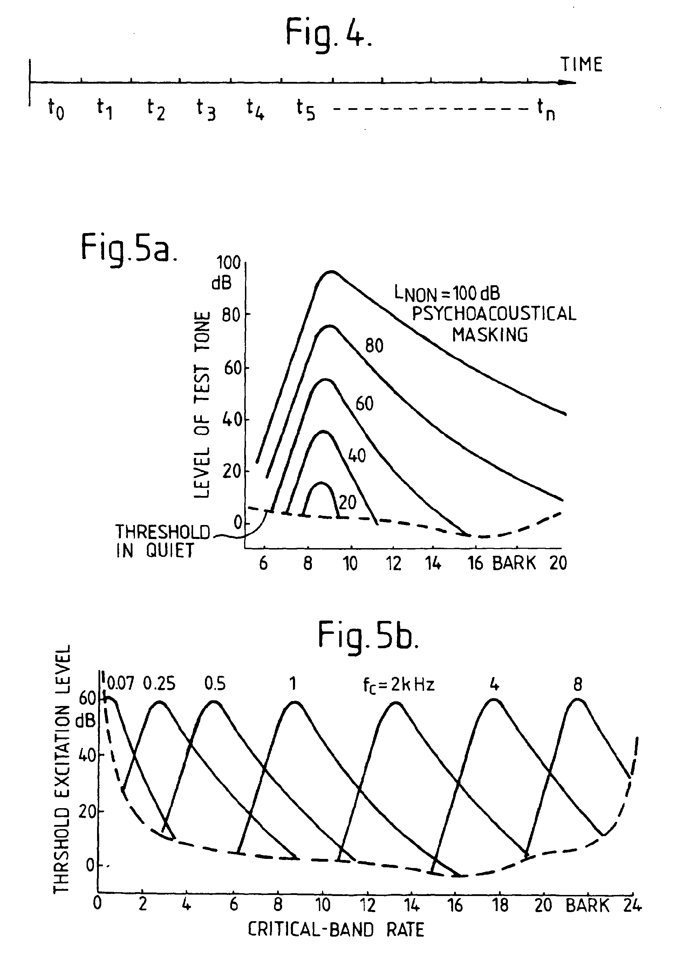

Referring to Figure 4, the test signal data stored in the store 71 is reconstituted to form a test signal comprising a plurality of segments $t_0$, $t_1$, $t_2$ ... $t_n$.

Each of the segments $t_o$ - $t_n$ typically corresponds to a different speech sound (e.g. a different phoneme) or to silence. One known artificial voice test signal is disclosed in CCITT Recommendation P50 (Recommendation on Artificial Voices, Vol. Rec P50, Melbourne 1988, published by CCITT). In the P50 test signal, each segment lasts 60ms.

In the P50 test signal, the segments are grouped into patterns each comprising a randomly selected sequence of 16 predetermined spectral patterns, defined by the recommendation, with spectrum densities $S_i(f)$ equal to

$$\text{Spectrum density } S_i(f) \; = \; 1/(A_{ij} \; + \; 2 \sum_{j=1}^{12} \; A_{ij} \; [\cos(2\pi if)]);$$

$$i \; = \; 1,2, \dots 16$$

The transition between the different segments in each pattern is arranged to be smooth. Of the patterns, thirteen correspond to voiced speech and the remaining three to unvoiced speech. A sequence of speech can either be stored on a recording medium and reproduced, or can be generated from stored data using a vocoder as described in the above referenced Irii paper, for example.

The P50 signal has a long term and short term spectral similarity to speech when averaged over about 10 seconds. Accordingly the speech sequence shown in Figure 4 is chosen to have a duration at least this long.

Distortion

The signal leaving the telecommunications apparatus 1 under test differs from the test signal supplied to the input port 2. Firstly, there will be time-invariant linear distortions of the signal, resulting in overall changes of amplitude, and in filtering of the signal so as to change its spectral shape. Secondly, noise will be added to the signal from various sources, including constant noise sources (such as thermal noise) and discontinuous sources (such as noise bursts, dialling pulses, interference spikes and crossed lines). Thirdly, there will be non-linear and time-varying distortions of the signal due to non-linear elements such as codecs and time-varying elements such as echo cancellers and thresholders.

The presence of non-linear distortion can cause intermodulation between noise and the signal, and the distortion at the output port 3 therefore depends not only upon the signal and the apparatus 1 but also the noise. Further, the presence of time-varying distortion means that the distortion applied to any given temporal portion of the signal depends upon preceding temporal portions of the signal and noise; for instance, if high level noise is present before the beginning of a phoneme, a voice activity detector may not clip the phoneme at all, whereas if the phoneme is preceded by silence, the voice activity detector will heavily clip the beginning of the phoneme causing substantial distortion.

Analyzer 8

The analysis according to the present invention is intended to provide an acceptability signal output which depends upon the distortion of the test signal similarly to the response of a human ear, as it is presently understood.

Without dwelling upon the physical or biological mechanisms giving rise to these phenomena, it is well known that the human perception of sound is affected by several factors. Firstly the presence of one sound "masks" (i.e. suppresses the perception of) another sound in a similar spectral (frequency) region. The extent to which the other sound is masked depends both upon how close in pitch it is to the first sound and upon the amplitude of the first sound. Thus, the human perception of errors or distortions in a sound depends upon the sound itself. Errors of low amplitude in the same spectral region as the sound itself may be masked and correspondingly be inaudible (as, for example, occur with quantising errors in sub band coding).

Secondly, the masking phenomenon has some time dependence. A sound continues to mask other sounds for a short period after the sound is removed; the amplitude of the masking effect decays rapidly after the removal of the first sound. In other words, low-amplitude sounds remain masked after removal of the masking signal for a longer time than do high amplitude sounds. Thus, errors or distortions will be masked not only by the present signal but also by portions of the signal which preceded it (to a lesser extent). This is referred to as "forward masking". It is also found that the application of a high level sound just after a lower level sound, which would otherwise have been audible retrospectively, makes the earlier sound subjectively inaudible. This is referred to as "backward masking".

Thirdly, the human ear is not directly responsive to the frequency, but to the phenomenon perceived as "pitch" of a sound, which corresponds to a non-linear warping of the frequency axis.

Fourthly, the human ear is not directly responsive to amplitude, even when a signal is not masked, but to the phenomenon perceived as loudness which is a non-linear function of amplitude.

Accordingly, in this embodiment the analyzer 8 is arranged to process the signal received from the telecommunications equipment 1 to determine how significant or objectionable the distortion produced thereby in the test signal will be to a human listener, in accordance with the above known characteristics of the human ear.

More particularly, the analysis unit 8 is arranged to determine what the response of the human ear will be to the test signal generated by the test signal generator 7; and then to similarly process the signal from the telecommunications apparatus output 3 to determine the extent to which it perceptibly differs from the original test signal, by determining the extent to which distortions are perceivable.

Figure 5a shows schematically the variation of the spectral masking threshold (the threshold above which a second sound is obscured by a first) for narrow band noise at a fixed frequency. The five curves are for progressively higher levels of masking noise, and it will be seen that the effect of increasing the level of masking noise is to cause a roughly linear increase in the masking threshold at the masking noise frequency, but also to change the shape of the threshold away from the noise frequency (predominantly towards higher frequencies). The masking effect is therefore amplitude-non-linear with respect to the amplitude of the masking noise.

For a given masking noise level, the width (measured, for example, at the 3 dB points below the central masking frequency) of the masked spectral band varies with the frequency of the masking noise. This variation of the width of the masked bands is related to the characteristic of the human auditory filter shape for frequency discrimination, and therefore to the human perception of pitch.

Accordingly, as shown in Figure 5b, a scale of pitch, rather than frequency, can be generated from the frequency scale by warping the frequency scale, so as to create a new scale in which the widths of masking bands are constant. Figure 5b shows the critical band rate, or Bark, scale which is derived by considering a set of narrow band masking tones at different frequencies which cross at the -3 dB point. This scale is described, for example, in "Audio Engineering and Psychoacoustics: Matching Signals to the Final Receiver, the Human Auditory System", J. Audio Eng. Soc. Vol. 39, March 1991, Zwicker and Zwicker.

The critical bands shown in Figure 5b are similar in shape (on the frequency axis) below 500 hertz when represented on a linear frequency scale. Above 500 hertz, they are similar in shape when viewed on a logarithmic frequency scale. Since the telephony band width is typically 300 to 3150 hertz, and telecommunications apparatus is often band limited to between these limits, the transformation to the pitch scale in this embodiment ignores the linear region below 500 hertz with only a small compromise in accuracy.

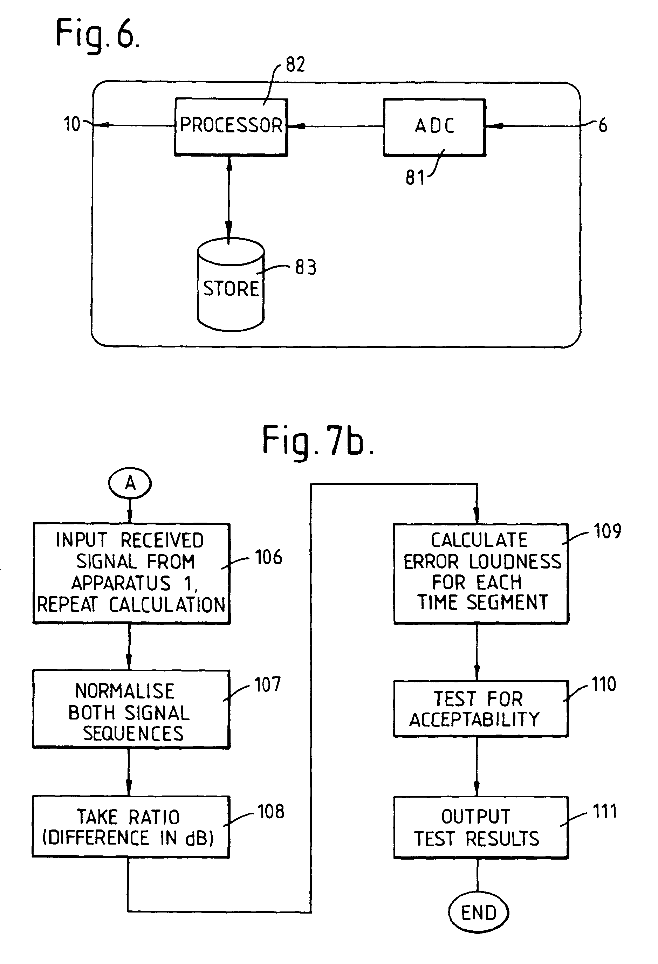

Referring to Figure 6 the analysis unit 8 comprises an analogue to digital converter (ADC) 81 arranged to receive signals from the input port 6 and produce a corresponding digital pulse train; an arithmetic processor 82 (for example, a microprocessor such as the Intel 80486 processor, or a digital signal processing device such as the Western Electric DSP 32C or the Texas Instruments TMS C30 device), coupled to receive the digital output of the ADC 81, a memory device 83 storing instruction sequences for the processor 82 and providing working memory for storing arithmetic results, and an output line 84 from the processor 82 connected to the output 10.

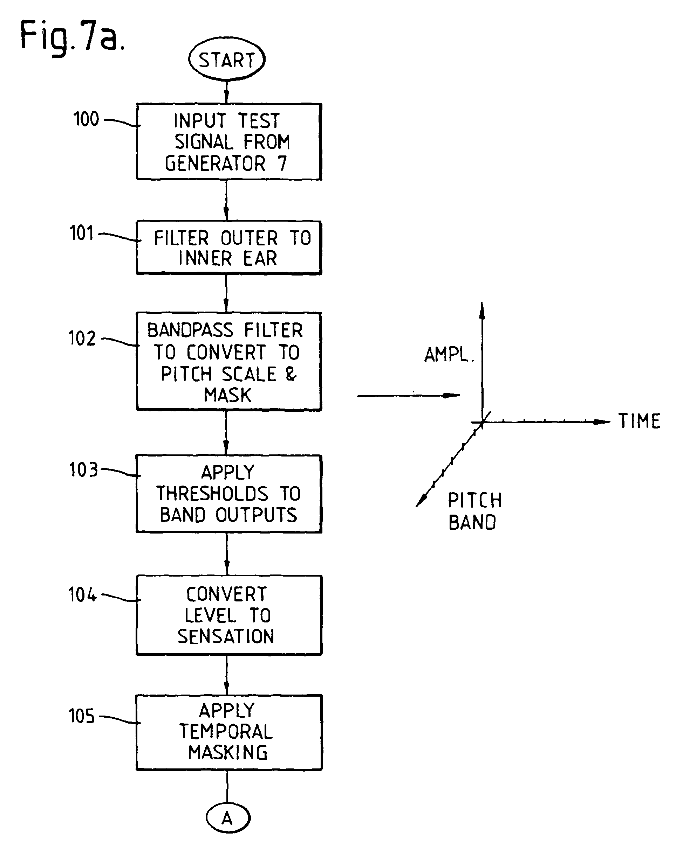

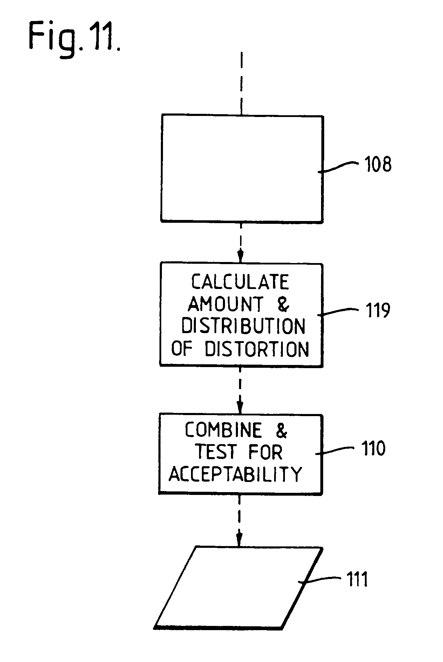

Referring to Figures 7a, 7b, and 11 the processes performed by the processor 82 will now be described.

Firstly, the test signal supplied from the test signal generator 7 is input directly to the input port 6 in a step 100, without passing through telecommunications apparatus 1.

In the next step 101, the signal from the ADC 81 is filtered by a filter which corresponds to the transfer function between the outer portions of the ear and the inner ear. The filtering may typically be performed by executing a digital filtering operation in accordance with filter data stored in the memory 83. The filter may be characterised by a transfer function of the type described in "Psychoacoustic models for evaluating errors in audio systems", J.R. Stuart, Procs. IOA, vol. 13, part 7, 1991.

In fact, the transfer function to the inner ear will vary slightly depending upon whether the sound is coupled closely to the ear (e.g. through a headset) or more distantly (e.g. from a loudspeaker); accordingly, the processor 82 and store 83 may be arranged to store the characteristics of several different transfer functions corresponding to different sound locations related to the type of telecommunications apparatus 1 on test, and to select an appropriate filter in response to a user input specifying the telecommunications apparatus type. The filtered signal after the execution of the step 101 corresponds to the signal as it would be received at the inner ear.

Next, in a step 102, the signal is split into a plurality of spectral bands having bandwidths which vary logarithmically with frequency so as to effect the transformation from frequency to pitch. In this embodiment, the signal is bandpass filtered into 20 bands each one-third of an octave in bandwidth, from 100Hz to 8kHz according to International Standard ISO 532B. The ISO band filters are similar in shape when viewed on a logarithmic frequency axis and are well known and documented. The average signal amplitude in each of the 20 bands is calculated every 4 milliseconds, and the signal after filtering thus comprises a series of 4ms time portions each comprising 20 frequency band amplitude values. This bandpass filtering is performed for all the values in the test signal (which lasts on the order of several seconds, for example, 10 seconds).

The relatively wide filters take account of the masking within each filter band, and the broad, overlapping skirts of the filters ensure that spectral masking due to neighbouring frequencies is also taken account of.

Next, in step 103, frequency dependent auditory thresholds specified in International Standard ISO 226 are applied to each of the band outputs. This simulates the effect of the minimum audibility threshold indicated in Figure 5a. These thresholds are stored in the memory 83.

Next, in step 104, the bandpass signal amplitudes are converted to a phone or sensation level which is more equivalent to the loudness with which they would be perceived by a human auditory system. The conversion is non-linear, and depends upon both signal amplitude and frequency. Accordingly, to effect the conversion, the equal loudness contours specified in international standard ISO 226 are applied to each of the band outputs. These equal loudness contours are also stored in the memory 83.

Next, in step 105, a temporal masking (specifically forward masking) is performed by providing an exponential decay after a significant amplitude value. In fact, the rate of decay of the masking effect depends upon the time of application of the masking sound; the decay time is longer for a longer time of application than for a shorter time. However, in this embodiment, it is found sufficient to apply a fixed exponentially weighted decay, defined by $y = 56.5 * 10^{(-0.01x)}$, (where y represents level and x represents time) which falls between the maximum decay (corresponding to over 200 milliseconds duration) and the minimum decay (corresponding to 5 milliseconds duration) encountered in practice.

In applying the forward masking, at each time portion for each bandpass filter amplitude, masking values for the corresponding bandpass in the three following time portions are calculated, using the above exponential decay. The three values are compared with the actual amplitudes of those bands, and if higher than the actual amplitudes, are substituted for the actual amplitudes.

As noted above, it is also possible for a sound to mask an earlier occurring sound (so called "backward masking"). In this preferred embodiment, the forward masking process is replicated to perform backward masking, using the same type of exponential decay, but with different numerical constants (in other words, for each time portion, values of masking for earlier occurring time portions are calculated, and if higher than the actual amplitudes for those bands, are substituted for the actual amplitudes).

Thus, after step 105 the calculated signal data comprises a succession of time portion data each comprising 20 bandpass signal amplitudes, thresholded so that some amplitudes are zero, and the amplitude of a given band in a given time portion being dependent upon the amplitudes of corresponding bands in past and future time portions due to the forward and backwards masking processing.

This corresponds to a surface indicating, along the signal pitch and time axes, the masking effect which the test signal would have had upon the human ear if directly applied without the telecommunications apparatus 1.

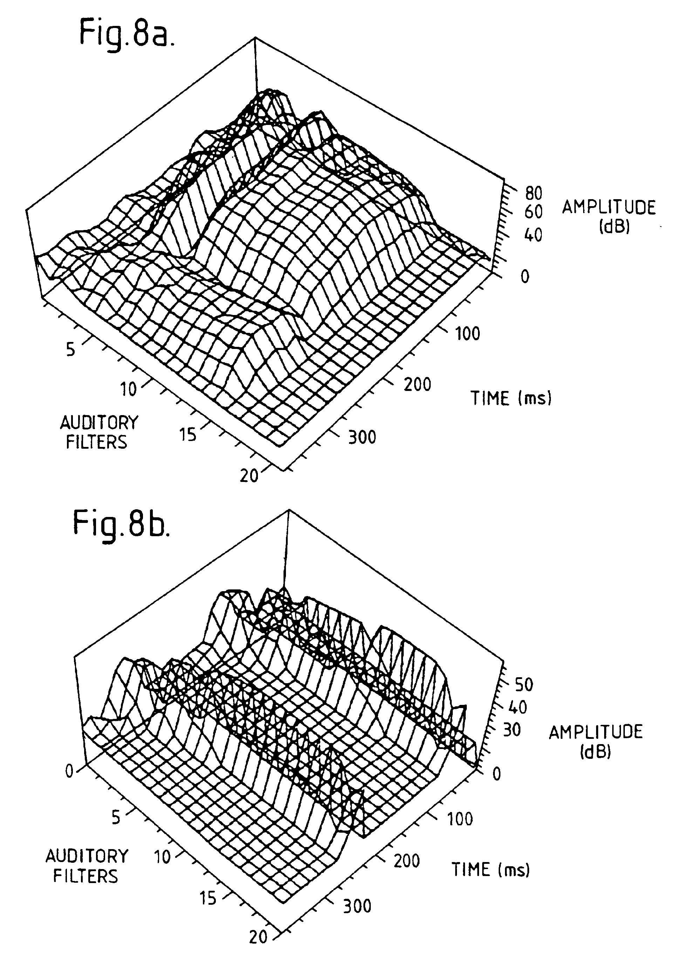

Figures 8a and 8b show excitation surfaces generated by the above process. Figure 8a corresponds to a speech event comprising a voiced sound followed by an unvoiced sound; the formant structure of the first sound and the broad band nature of the second sound can readily be distinguished. Figure 8b shows a corresponding surface for two clicks, and the effect of the forward masking stage 105 of Figure 7 is clearly visible in the exponential decays therein.

Next, in step 106, the test signal generator 7 repeats the test signal but this time it is supplied to the input port 2 of the telecommunications apparatus 1, and the output port 3 thereof is connected to the input port 6 of the test apparatus 4. The calculation stages 101 - 105 are then repeated, to calculate a corresponding surface for the received signal from the telecommunications apparatus.

Having calculated the effect on the ear (excitation) of the original test signal and of the output from the telecommunications apparatus (the distorted test signal), the difference in the extent to which the two excite the ear corresponds to the level of distortion of the test signal as perceived by the human auditory system. Accordingly, the amplitude transfer function of the telecommunications apparatus is calculated, for each frequency portion, by taking the ratio between the corresponding bandpass amplitudes (or where, as in Figure 8a or 8b, the bandpass amplitudes are represented on a dB scale, by taking the difference between the amplitude in dBs). To avoid an overall gain term in the transfer function, which is irrelevant to the perceived distortion produced by the telecommunications apparatus, each bandpass term may be normalised by dividing (or, when represented in dBs, subtracting) by the average amplitude over all bandpass filter outputs over all time portions in the test signal sequence, step 107.

If the original test signal and the output of the telecommunications apparatus 1 are identical, but for some overall level difference (that is to say, if the telecommunications apparatus 1 introduces no distortion), the ratio between each bandpass filter output of the two signals will be unity, and the logarithmic difference in dBs in amplitude will be zero; accordingly, the corresponding difference plot to Figure 8a or Figure 8b would be completely flat at all times and in all pitch bands. Any deviation is due to distortion in the telecommunications apparatus. Additive distortion errors will appear as peaks, and signal loss will appear as troughs, relative to the undistorted average level.

The perceptual significance given to these errors is not directly dependent upon their amplitude, but rather upon loudness which is a non-linear function of amplitude, and a function of frequency. Calculation of the perceptual loudness is given in International Standard ISO 532B. However, this specification applies to binaural sound, and for monaural sound (as commonly found in telecommunications applications) it is possible to use a simpler calculation of loudness based on the established monaural telephony perceptual weightings for loudness given in CCITT Recommendation P79 (Blue Book Volume V, Melbourne 1988, CCITT). This method of estimating the error loudness takes account of the fact that errors at some frequencies are perceived more easily, and are hence given greater weighting, than those at other frequencies. For each time portion in the signal sequence, in this embodiment, an error magnitude is calculated as :

$$ErrLoud_t = 0.8 \sum_{n=1}^{14} Er_n * 10^{(-0.0175 \cdot WSn)}$$

Where: $ErrLoud_t$ error loudness at time t (+ve and -ve parts calculated separately)

n      nth 1/3rd octave band from 200 Hz to 4kHz

$Er_n$      error amplitude in dB.

$WS_n$      SLR weighting for the nth frequency

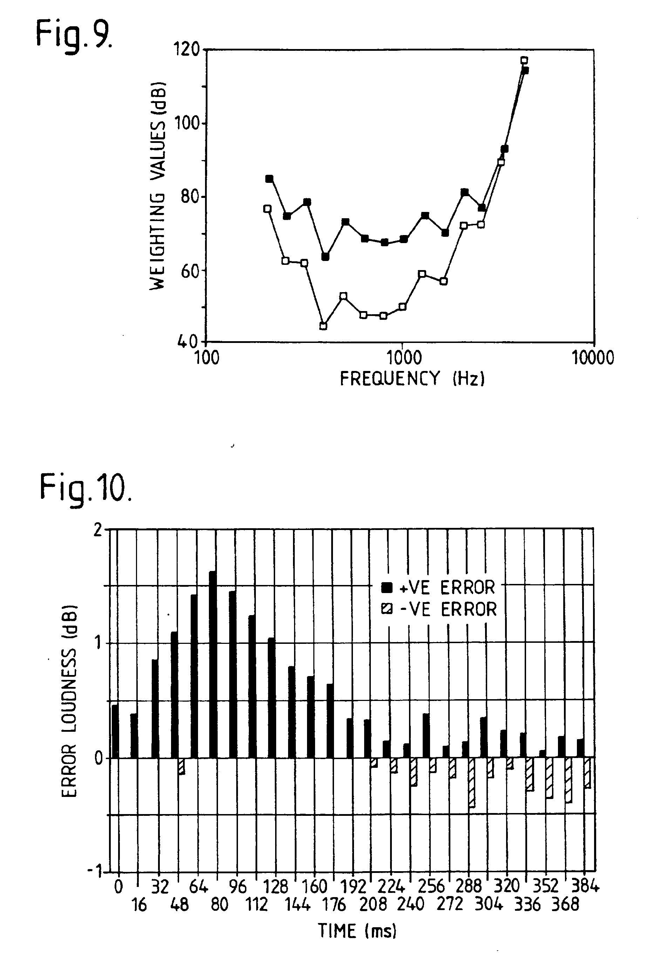

for a narrow band model of the error extending between 200 hertz and 4 kilohertz, where the Weighting coefficients derived from the P79 Recommendation are as shown in Figure 9.

For a broad band telephony model making use of all 20 band path outputs, the corresponding error loudness is calculated as:

$$ErrLoud_t = 1.28 \sum_{n=1}^{21} Er_n * 10^{(-0.0175 \cdot WSn)}$$

In this case, the value of n covers all 20 bands from 100 hertz to 8 kilohertz.

The additive error (positive errors) and shortfall errors (negative error values) are separately cumulated to give positive and negative subtotals.

As shown in Figure 10, the result of the calculation stage 109 is a time sequence of time averaged error loudness values. In this invention, rather than calculating the overall loudness of the distortion, a different test measure which is more closely related to the subjective "listening effort" measure $Y_{LE}$ is derived.

The sequence of sets of bandpass auditory excitation values (corresponding to a surface along the time and pitch axes) is divided into contiguous sectors of length 96 milliseconds (i.e. 48 successive 2 millisecond portions) so as to include at least two different values for the lowest pitch band. The total amount of error or error activity, is calculated as:

$$\text{Error Activity, } E_A = 10 \log \sum_{i=1}^{48} \sum_{j=1}^{20} |c(i,j)|$$

where c(i,j) is the error value in the $i^{th}$ time portion and $j^{th}$ pitch band of the error surface sector to be analyzed.

This gives an indication of the absolute amount of distortion present.

Then, the distribution of the error over time and pitch (or rather, the entropy of the distortion, which corresponds to the reciprocal of the extent to which the energy is distributed) is calculated as follows:

$$\text{Error entropy, } E_E = -\sum_{i=1}^{48} \sum_{j=1}^{20} a(i,j) * ln(a(i,j))$$

where

$$a(i,j) = \frac{|c(i,j)|}{E_A}$$

The log term in the above expression controls the extent to which the distribution of energy affects the entropy $E_E$ acting as a non-linear compression function.

It is found that the error activity and error entropy criteria together correspond well to the subjectively perceived level of distortion, as the listener will find a high level of error considerably more noticeable if it is concentrated at a single pitch over a short period of time, rather than being distributed over pitch and time. Accordingly, in this invention, as shown in Figure 11, rather than calculating loudness in the step 109 of Figure 7b, a step 119 of calculating the amount and distribution (the activity and entropy) of the distortion is performed.

In the step 110, the two measures may separately be subjected to thresholds, or they may be combined and the combined measure thresholded. For example, they may be summed or multiplied together with appropriate weightings in a further step. This is then output as the measure of distortion of the telecommunications apparatus 1 to the output port 9 in step 111.

Second Embodiment

In the second embodiment, the analysis unit 8 is the same or similar to that in the first embodiment. However, the test signal generating unit 7 does not utilise the P50 test signal, but instead generates a different type of artificial, speech-like test signal.

Whilst the P50 test signal is acceptable for many purposes, it is observed to lack a full range of fricative sounds. Furthermore, it has a rather regular and monotonous long term structure, which sounds rather like a vowel-consonant-vowel-consonant ... sequence. As discussed above, however, since many telecommunications systems include time dependent elements such as automatic gain controls or voice switches, the distortion applied to any given portion of the test signal is partly dependent upon the preceding portion of the test signal; in other words, the context of that portion of the speech signal within the time sequence of the signal as a whole.

Accordingly, in this embodiment, a small, representative, subset of speech segments (selected from the tens of known phonemes) is utilised, and a test signal is constructed from these sounds assembled in different contextual sequences. Since distortion is being measured, it is more important that the test sequence should include successions of sounds which are relatively unlike one another or, more generally, are relatively likely to cause distortion when one follows another. In a simpler form of this embodiment, the test signal might comprise each of the selected segments prefixed by a conditioning portion selected from a high, low or zero level, so that the test signal enables each representative speech segment (phoneme) to be tested following prefixed sounds of different levels. The length of the prefixing signal is selected to extend over the time constants of the system under test; for example, codec adaptation and active gain control takes on the order of a few seconds, whereas speech transducer transient response is on the order of a few milliseconds.

Third Embodiment

In a third embodiment of the invention, the test signal generator 7 operates in the same manner as in either the first or second embodiments. However, the operation of the analysis unit 8 differs in steps 102 to 110.

Although the logarithmically spaced filters of the first embodiment are found to be a reasonable approximation to the pitch scale of the human ear, it is found that an even better performance is given by the use of filters which are evenly spaced on a Bark scale (as discussed above). Accordingly, in step 102, the twenty bandpass filters are rounded exponential (roex) filters spaced at one Bark intervals on the pitch scale. The rounded exponential function is described in "Suggested formulae for calculating auditory-filter bandwidths and excitation patterns", (J. Acoust.Soc.Am. 74, 750-753 1983), B.C.J. Moore and M.R Glasburg.

Rather than calculating the average signal amplitude in each band every four milliseconds, in this embodiment, the signal amplitude is calculated over different averaging periods for the different bands, averaging over two milliseconds for the highest pitch band and 48 milliseconds for the lowest pitch band, with intervening averaging times for the intervening bands. It is found that varying the temporal resolution in dependence upon the pitch (or, in general, the frequency) so as to resolve over a longer interval at lower frequencies gives a substantially improved performance.

For subsequent processing, as before, for each two millisecond time portion, an array of bandpass filter output values are generated. For bands lower than the highest pitch, values are repeated more than once for intervening time portions (for example, for the lowest pitch band, each value is repeated 24 times for the two millisecond time portions between each 48 millisecond average amplitude value). Alternatively, a numeric interpolation may be performed between succeeding values, rather than merely repeating them.

The steps 103-111 are the same as in the first embodiment (with the adjustment of numerical constants to reflect the different filter responses).

Fourth Embodiment

In this embodiment as in the third embodiment the speech signal may be generated according to either the first embodiment or the second embodiment. However, the analysis unit 8, rather than performing the above-described masking calculations, directly simulates the human ear, as described for example in "Digital Filter Simulation of the Basilar Membrane", Computer Speech and Language, No. 3 1989, Ambikairajh, Black, and Linggard (incorporated herein in its entirety by reference). Such a model will receive as input the signal from the ADC 81, split the signal into a plurality of frequency bands, and generate a series of outputs at each time portion which corresponds to the effects on parts of the human hearing structure of the distorted signal from the telecommunications apparatus 1. The outputs of the model are then combined by appropriate processing and decision logic (for example, a neural network or a fuzzy logic controller) based on empirically derived correlation with actual listener responses to provide a signal indicating the perceptual significance of the distortion in the signal.

Aspects of the analysis method of this embodiment could also be used with other test signals (for example, real human speech).

Effects of the Invention

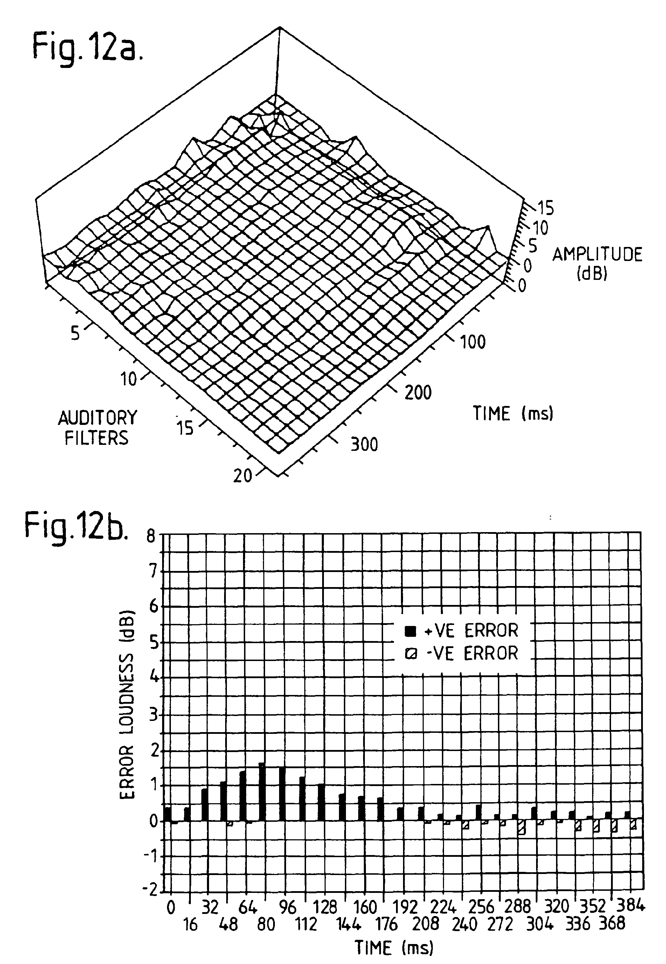

Referring to Figures 12 to 16, the representation of various types of telecommunications apparatus distortion of the test signal of Figure 8a by the first and second embodiments of the invention will now be illustrated.

Figure 12a shows the error excitation surface produced by instantaneous amplitude distortion produced by adding low amplitude second and third order terms to the signal. The distortion was characterised as "barely audible" by a human listener. It will be seen that the error loudness figures are small and mostly positive, as shown in Figure 12b.

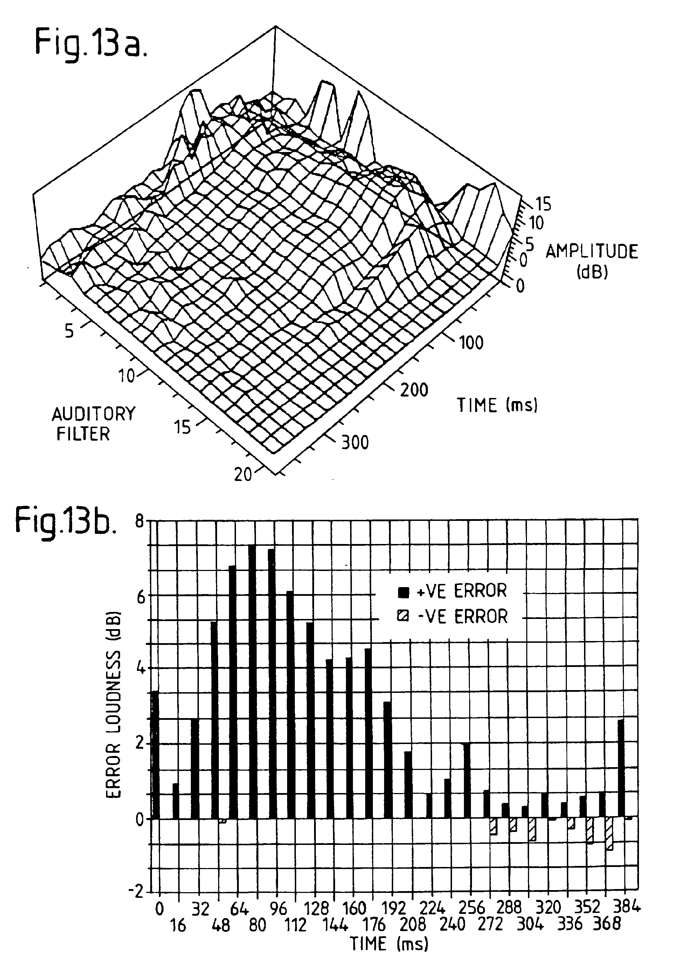

Figure 13a shows the corresponding error amplitude surface for fully audible non-linear distortion of the same type, but with higher value second and third order terms. The amplitude of the error and the error loudness (Figure 13b) are both much larger. Additionally, it will be seen that the majority of the distortion loudness coincides with the voiced part of the test signal of Figure 8a, since this contains low frequency formant tones whose harmonics are perceptually significant.

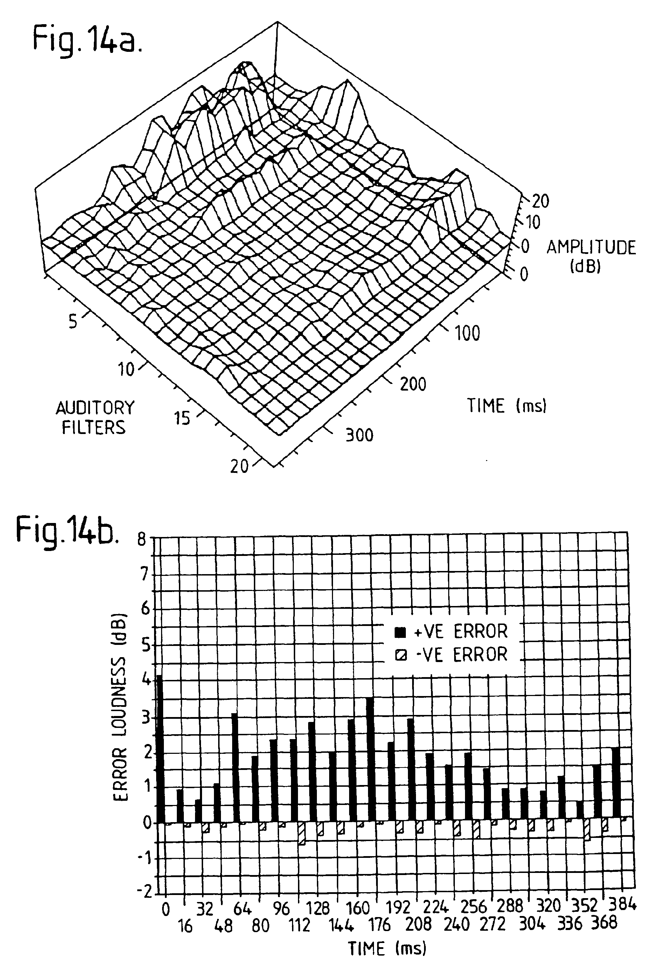

Referring to Figures 14a and 14b, the effects of modulated noise reference unit (MNRU) distortion are shown. MNRU distortion is described in Annex A of CCITT Recommendation P81, and is designed to be theoretically equivalent to the distortion introduced by a single A Law PCM stage (of the kind widely used in telecommunications systems). The level of distortion was characterised as fully audible by a human listener. Again, it will be seen from Figure 14a that the perceptual distortion is associated chiefly with formants in the voiced part of the test signal.

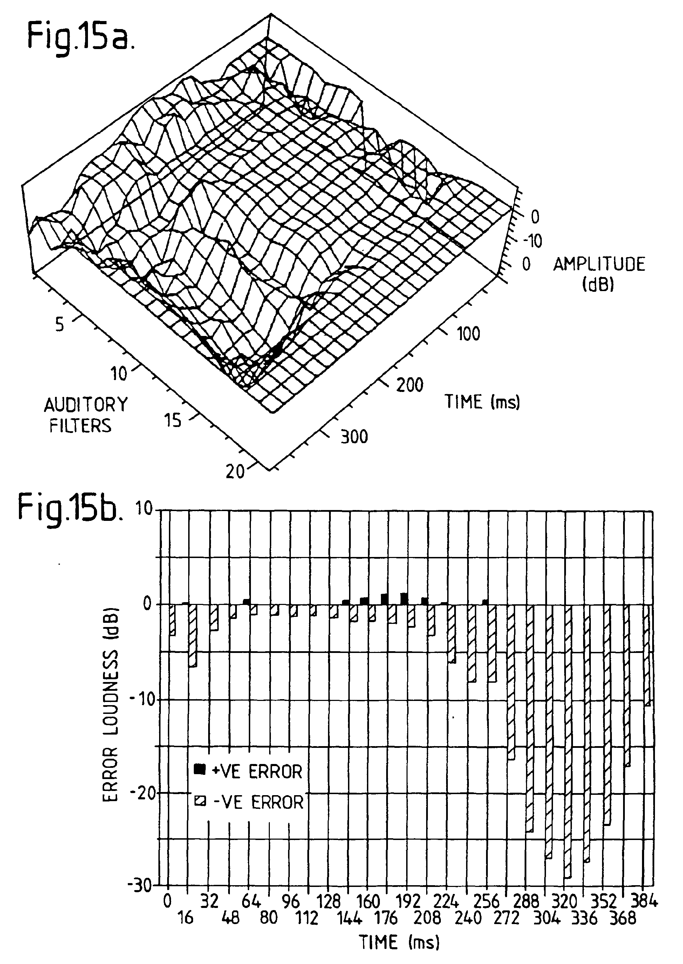

Referring to Figures 15a and 15b, when crossover distortion is supplied (i.e. distortion of the kind $y = mx + c$ for x greater than zero and $y = mx - c$ for x less than zero) low amplitude signals are not transmitted, and so the lower energy unvoiced sound in the second part of the test signal is drastically attenuated. Figures 15a and 15b therefore suggest a very significant subjective impact of this kind of distortion, which corresponds with the reaction of the human listener.

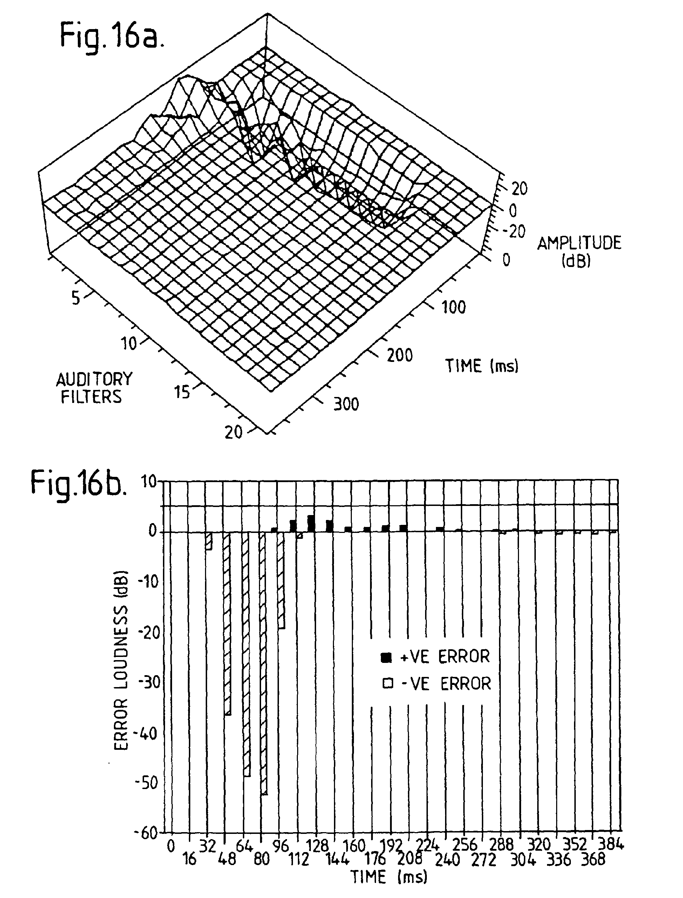

Finally Figures 16a and 16b illustrate the effects of a voice activity detector with a 50 millisecond onset time. In the initial part of the signal, there is a large negative error loudness because the signal has been clipped. The following positive error loudness is due to overshoot or settling. The error loudness values indicate a high level of perceived distortion, which coincides with the reaction of the human listener.

Other Alternatives and Modifications

It will be clear from the foregoing that many variations to the above described embodiments can be made without altering the principle of operation of the invention. For example, if the telecommunications apparatus is arranged to receive a digital input, the DAC 71 may be dispensed with. The signal from the output port 5 could be supplied in digital form to the input port 2 of the telecommunications apparatus and the ADC 81 may likewise be dispensed with. Alternatively, an electro-mechanical transducer could be provided at the output port 5 and the signal supplied as an audio signal. In the latter case the test signal may be supplied via an artificial mouth as discussed in CCITT P.51 Recommendation on Artificial Ear and Artificial Mouth, Volume 5, Rec P.51, Melbourne 1988 and earlier UK patent application GB2218299 (8730346). Similarly, the distorted speech signal could be received via an artificial ear acoustic structure as described in the above CCITT Recommendation and our earlier UK patent application GB2218300 (8730347). This would reduce the filtering needed in the step 101.

Although in the above described embodiments, a single decay profile for temporal masking is described, it may be preferred in alternative embodiments of the invention to provide a plurality (for instance 2) of decay rates for forward (and backward) masking, and to select the required decay rate in dependence upon the duration of the masking sound (i.e. the number of time portions over which the amplitude in one of the passbands exceeds a predetermined level). For example, maximum and minimum decays (corresponding to 200 milliseconds and 5 milliseconds duration respectively, may be defined by;

$$y = 58.4039 * 10^{(-0.0059x)}$$

$$y = 55.5955 * 10^{(-0.0163x)}$$

Although connections to an actual telecommunications apparatus have been described herein, it would equally be possible to programme a computing apparatus to simulate the distortions introduced by telecommunications apparatus, since many such distortions are relatively easy to characterise (for example, those due to VADs or codecs). Accordingly, the invention extends likewise to embodiments in which a signal is supplied to such simulation apparatus, and the simulated distorted output of the telecommunications apparatus is processed. In this way, the acceptability to a human listener of the combination of many complicated and non-linear communications apparatus may be modelled prior to assembling or connecting such apparatus in the field.

Although the analysis unit 8 and test signal generator 7 have been described as separate hardware, in practice they could be realised by a single suitably processed digital processor; likewise, the telecommunications apparatus simulator referred to in the above embodiment could be provided by the same processor.

Although in the above described embodiments the analyzer unit 8 receives and analyses the test signal from the test signal generator 7, in practice the analyzer unit 8 could store the excitation data previously derived for the, or each of several, test sequences by an earlier analysis. Thus, the analyzer unit in such embodiments need not be arranged itself to analyze the undistorted test signal.

In the above described embodiments, other measures of the signal distortion than the error loudness, error activity or error entropy may readily be derived from the calculated data corresponding to Figures 11a, 13a, 14a, 15a and 16a. In fact, loudness of the distortion is only one of the measures of its effect on a human listener; others are listener fatigue and listening effort. For example, the distortion or error data calculated according to the above described embodiments may be employed as inputs to a statistical classifier, neural network, or fuzzy logic engine, operating in accordance with parameters derived empirically by comparative tests with genuine human listeners.

In this document, for convenience, the term "phoneme" is used to indicate a single, repeatable, human speech sound, notwithstanding that in its normal usage a "phoneme" may denote a sound which is modified by its speech context.

Unless the reverse is indicated or apparent, the features of the above embodiments may be combined in manners other than those explicitly detailed herein.

Although the embodiments described above relate to testing telecommunications apparatus, the application of novel aspects of the invention to testing or analysis of other speech-carrying apparatus is not excluded.

**Claims**

1.　Test apparatus for testing equipment for handling speech signals, comprising means (7) for supplying a test signal, analysis means (8) for receiving a distorted signal which corresponds to said test signal when distorted by equipment (1) to be tested, and for analyzing said distorted signal to generate a distortion perception measure which indicates the extent to which the distortion of said signal will be perceptible to a human listener,
　**characterised in that** the analysis means (8) comprises means arranged to process at least the distorted signal to generate a plurality of spectral components, and means to generate, for each such component, a plurality of values ($c(i,j)$), each value relating to the error in a respective temporal portion of the component; and means to generate a distortion perception measure ($Y_{LE}$) which indicates the extent to which the distortion of said signal will be perceptible to a human listener by measuring the said errors over a plurality of said temporal portions and said components, wherein the distortion perception measure is dependent on the statistical distribution ($E_E$) of said errors over said temporal portions and spectral components, as given by the formula

$$\text{Error entropy,} \quad E_E = -\sum_i \sum_j a(i,j) * \ln(a(i,j))$$

where

$$a(i, j) = \frac{|c(i, j)|}{E_A}$$

and

$$E_A = 10 \log \sum_i \sum_j |c(i, j)|$$

**2.** Test apparatus according to claim 1, wherein the distortion perception measure $Y_{LE}$ is also dependant on the aggregate $E_A$ of said differences.

**3.** Test apparatus according to claim 1 or 2 wherein the time interval represented by each portion is longer for lower frequency components than for higher frequency components.

**4.** Test apparatus according to any preceding claim, in which the analysis means (8) is arranged so as to generate said distortion perception measure (c(i,,j)) to depend upon perceptual loudness of said distortion, and to depend nonlinearly upon the amplitude of said distortion.

**5.** A method of testing speech signal handling equipment comprising the steps of:

supplying a test signal to the speech signal handling equipment
analyzing the test signal as distorted by said speech signal handling equipment;
determining the extent to which the distortion of said signal will be perceptible to a human listener; and
processing at least the distorted signal to generate a plurality of spectral components,
for each such component, generating a plurality of values (c(i,j)), each value relating to the error in a respective temporal portion of the component; and
generating a distortion perception measure ($Y_{LE}$) indicative of the extent to which the distortion of said signal will be perceptible to a human listener by measuring the said errors over a plurality of said temporal portions and said components, wherein the distortion perception measure ($Y_{LE}$) is dependent on the statistical distribution ($E_E$) of said errors over said temporal portions and spectral components; given by the formula

$$E_E = -\sum_i \sum_j a(i, j) * \ln(a(i, j))$$

where

$$a(i, j) = \frac{|c(i, j)|}{E_A}$$

and

$$E_A = 10 \log \sum_i \sum_j |c(i, j)|$$

**6.** Method according to claim 5, wherein the distortion perception measure $Y_{LE}$ is also dependant on the aggregate

$E_A$ of said differences.

7.  Method according to claim 5 or 6 wherein the time interval represented by each portion is longer for lower frequency components than for higher frequency components.

8.  Method according to claim 5, 6 or 7, in which said distortion perception measure (c(i,j)) depends upon perceptual loudness of said distortion, and nonlinearly upon the amplitude of said distortion.

**Patentansprüche**

1.  Testvorrichtung zum Testen einer Einrichtung zur Handhabung von Sprachsignalen, die aufweist Mittel (7) zum Liefern eines Testsignals, Analysemittel (8) zum Empfangen eines verzerrten Signals, das dem Testsignal entspricht, wenn es durch die zu testende Einrichtung (1) verzerrt wird, und zum Analysieren des verzerrten Signals, um ein Verzerrungswahrnehmungsmaß zu erzeugen, das den Umfang anzeigt, zu dem die Verzerrung des Signals für einen menschlichen Zuhörer wahrnehmbar ist, **dadurch gekennzeichnet, dass** das Analysemittel (8) Mittel aufweist, die ausgebildet sind, zumindest das verzerrte Signal zu verarbeiten, um eine Vielzahl spektraler Komponenten zu erzeugen, und Mittel, um für jede derartige Komponente eine Vielzahl von Werten (c(i, j)) zu erzeugen, wobei jeder Wert den Fehler in einem jeweiligen zeitlichen Abschnitt der Komponente betrifft; und Mittel zur Erzeugung eines Verzerrungswahrnehmungsmaßes ($Y_{LE}$), das den Umfang anzeigt, zu dem die Verzerrung des Signals für einen menschlichen Zuhörer wahrnehmbar ist, durch Messen der Fehler über eine Vielzahl der zeitlichen Abschnitte und der Komponenten, wobei das Verzerrungswahrnehmungsmaß abhängig ist von der statistischen Verteilung ($E_E$) der Fehler über die zeitlichen Abschnitte und spektralen Komponenten, wie gegeben wird durch die Formel

$$\text{Fehlerentropie}, E_E = -\sum_i \sum_j a(i,j) * \ln(a(i,j))$$

wobei

$$a(i,j) = \frac{|c(i,j)|}{E_A}$$

und

$$E_A = 10 \log \sum_i \sum_j |c(i,j)|$$

2.  Testvorrichtung gemäß Anspruch 1, wobei das Verzerrungswahrnehmungsmaß $Y_{LE}$ auch abhängig ist von dem Aggregat $E_A$ dieser Unterschiede.

3.  Testvorrichtung gemäß Anspruch 1 oder 2, wobei das von jedem Abschnitt dargestellte Zeitintervall für Komponenten niedrigerer Frequenz länger ist als für Komponenten höherer Frequenz.

4.  Testvorrichtung gemäß einem der vorhergehenden Ansprüche, wobei das Analysemittel (8) ausgebildet ist, das Verzerrungswahrnehmungsmaß (c(i, j)) derart zu erzeugen, dass es von der wahrnehmbaren Lautheit der Verzerrung abhängt und nichtlinear von der Amplitude der Verzerrung abhängt.

5.  Verfahren zum Testen einer Sprachsignal-Handhabungseinrichtung, das die Schritte aufweist:

    Liefern eines Testsignals an die Sprachsignal-Handhabungseinrichtung;

Analysieren des Testsignals als verzerrt durch die Sprachsignal-Handhabungseinrichtung;

Bestimmen des Umfangs, zu dem die Verzerrung dieses Signals für einen menschlichen Zuhörer wahrnehmbar ist; und

Verarbeiten zumindest des verzerrten Signals, um eine Vielzahl von spektralen Komponenten zu erzeugen, Erzeugen einer Vielzahl von Werten (c(i, j)) für jede derartige Komponente, wobei jeder Wert den Fehler in einem jeweiligen zeitlichen Abschnitt der Komponente betrifft; und

Erzeugen eines Verzerrungswahrnehmungsmaßes ($Y_{LE}$), das den Umfang anzeigt, zu dem die Verzerrung des Signals für einen menschlichen Zuhörer wahrnehmbar ist, durch Messen der Fehler über eine Vielzahl der zeitlichen Abschnitte und der Komponenten, wobei das Verzerrungswahrnehmungsmaß ($Y_{LE}$) abhängig ist von der statistischen Verteilung ($E_E$) der Fehler über die zeitlichen Abschnitte und spektralen Komponenten, wie gegeben wird durch die Formel

$$E_E = -\sum_i \sum_j a(i, j) * \ln(a(i, j))$$

wobei

$$a(i, j) = \frac{|c(i, j)|}{E_A}$$

und

$$E_A = 10\log \sum_i \sum_j |c(i, j)|$$

6. Verfahren gemäß Anspruch 5, wobei das Verzerrungswahrnehmungsmaß $Y_{LE}$ auch abhängig ist von dem Aggregat $E_A$ dieser Unterschiede.

7. Verfahren gemäß Anspruch 5 oder 6, wobei das von jedem Abschnitt dargestellte Zeitintervall für Komponenten niedrigerer Frequenz länger ist als für Komponenten höherer Frequenz.

8. Verfahren gemäß Anspruch 5, 6 oder 7, wobei das Verzerrungswahrnehmungsmaß (c(i, j)) abhängig ist von einer wahrnehmbaren Lautheit der Verzerrung und nichtlinear von der Amplitude der Verzerrung.

**Revendications**

1. Dispositif de test destiné à tester un équipement destiné à gérer des signaux vocaux, comprenant un moyen (7) destiné à fournir un signal de test, un moyen d'analyse (8) destiné à recevoir un signal déformé qui correspond audit signal de test lorsqu'il est déformé par l'équipement (1) devant être testé, et destiné à analyser ledit signal déformé pour générer une mesure de perception de distorsion qui indique la mesure dans laquelle la distorsion dudit signal sera perceptible pour un auditeur humain,

**caractérisé en ce que** le moyen d'analyse (8) comprend un moyen agencé pour traiter au moins le signal déformé pour générer une pluralité de composantes spectrales, et un moyen pour générer, pour chaque telle composante, une pluralité de valeurs (c(i, j)), chaque valeur se rapportant à l'erreur dans une partie de temps respective de la composante, et un moyen pour générer une mesure de perception de distorsion ($Y_{LE}$) qui indique la mesure dans laquelle la distorsion dudit signal sera perceptible pour un auditeur humain en mesurant lesdites erreurs sur une pluralité desdites parties de temps et desdites composantes, où la mesure de perception de distorsion dépend de la distribution statistique ($E_E$) desdites erreurs sur lesdites parties de temps et lesdites composantes spectrales, comme donné par la formule

$$\text{Entropie d'erreur,} \quad E_E = -\sum_i \sum_j a(i,j) * \ln(a(i,j))$$

où

$$a(i,\ j) = \frac{|c(i,j)|}{E_A}$$

et

$$E_A = 10 \log \sum_i \sum_j |c(i,j)| \ .$$

**2.** Dispositif de test selon la revendication 1, dans lequel la mesure de perception de distorsion $Y_{LE}$ dépend également de l'agrégat $E_A$ desdites différences.

**3.** Dispositif de test selon la revendication 1 ou 2, dans lequel l'intervalle de temps représenté par chaque partie est plus long pour des composantes de fréquences plus basses que pour des composantes de fréquences plus élevées.

**4.** Dispositif de test selon l'une quelconque des revendications précédentes, dans lequel le moyen d'analyse (8) est agencé de façon à générer ladite mesure de perception de distorsion (c(i, j)) pour dépendre de l'intensité sonore de perception dans ladite distorsion, et pour dépendre de façon non linéaire de l'amplitude de ladite distorsion.

**5.** Procédé de test d'un équipement de gestion de signaux vocaux comprenant les étapes consistant à :

fournir un signal de test à l'équipement de gestion de signaux vocaux
analyser le signal de test comme étant déformé par ledit équipement de gestion de signaux vocaux,
déterminer la mesure dans laquelle la distorsion dudit signal sera perceptible pour un auditeur humain, et
traiter au moins le signal déformé pour générer une pluralité de composantes spectrales,
pour chaque telle composante, générer une pluralité de valeurs (c(i, j)), chaque valeur se rapportant à l'erreur dans une partie de temps respective de la composante, et
générer une mesure de perception de distorsion ($Y_{LE}$) indicative de la mesure dans laquelle la distorsion dudit signal sera perceptible pour un auditeur humain en mesurant lesdites erreurs sur une pluralité desdites parties de temps et lesdites composantes, où la mesure de perception de distorsion ($Y_{LE}$) dépend de la distribution statistique ($E_E$) desdites erreurs sur lesdites parties de temps et lesdites composantes spectrales, donnée par la formule

$$E_E = -\sum_i \sum_j a(i,j) * \ln(a(i,j))$$

où

$$a(i,\ j) = \frac{|c(i,j)|}{E_A}$$

et

$$E_A = 10 \log \sum_i \sum_j \left| c(i,j) \right| .$$

6. Procédé selon la revendication 5, dans lequel la mesure de perception de distorsion $Y_{LE}$ dépend également de l'agrégat $E_A$ desdites différences.

7. Procédé selon la revendication 5 ou 6, dans lequel l'intervalle de temps représenté par chaque partie est plus long pour des composantes de fréquences plus basses que pour des composantes de fréquences plus élevées.

8. Procédé selon la revendication 5, 6 ou 7, dans lequel ladite mesure de perception de distorsion (c(i, j)) dépend de l'intensité sonore de perception de ladite distorsion, et non linéairement de l'amplitude de ladite distorsion.

# Fig.1.

# Fig.2.

# Fig.3.

## Fig. 4.

## Fig. 5a.

## Fig. 5b.

# Fig.6.

# Fig.7b.

# Fig.7a.

```
      ┌─────────┐
      │  START  │
      └────┬────┘
           │
     ┌─────▼─────────┐
100 ─┤  INPUT TEST   │
     │  SIGNAL FROM  │
     │  GENERATOR 7  │
     └─────┬─────────┘
           │
     ┌─────▼─────────┐
101 ─┤ FILTER OUTER TO│
     │   INNER EAR   │
     └─────┬─────────┘
           │
     ┌─────▼──────────┐
102 ─┤ BANDPASS FILTER│
     │  TO CONVERT TO │
     │  PITCH SCALE & │
     │     MASK       │
     └─────┬──────────┘
           │
     ┌─────▼─────────┐
103 ─┤    APPLY      │
     │ THRESHOLDS TO │
     │ BAND OUTPUTS  │
     └─────┬─────────┘
           │
     ┌─────▼─────────┐
104 ─┤   CONVERT     │
     │   LEVEL TO    │
     │   SENSATION   │
     └─────┬─────────┘
           │
     ┌─────▼─────────┐
105 ─┤    APPLY      │
     │   TEMPORAL    │
     │   MASKING     │
     └─────┬─────────┘
           │
        ┌──▼──┐
        │  A  │
        └─────┘
```

AMPL.

→

TIME

PITCH
BAND

# Fig.8a.

# Fig.8b.

# Fig.9.

# Fig.10.

# Fig.11.

```
                    ┊
                ┌───────────┐
                │           │
                │           │──── 108
                │           │
                └───────────┘
                     ┊
                     ▼
                ┌───────────┐
                │ CALCULATE │
                │ AMOUNT &  │
                │DISTRIBUTION│──── 119
                │ OF DISTORTION│
                └───────────┘
                     ┊
                     ▼
                ┌───────────┐
                │ COMBINE & │
                │ TEST FOR  │──── 110
                │ACCEPTABILITY│
                └───────────┘
                     ┊
                     ▼
                 ╱─────────╱
                ╱         ╱──── 111
               ╱─────────╱
```

# Fig.12a.

# Fig.12b.

## Fig.13a.

## Fig.13b.

Fig.14a.

AMPLITUDE (dB)

TIME (ms)

AUDITORY FILTERS

Fig.14b.

■ +VE ERROR
▨ -VE ERROR

ERROR LOUDNESS (dB)

TIME (ms)

Fig.15a.

Fig.15b.

## Fig.16a.

## Fig.16b.